# EUROPÄISCHE PATENTSCHRIFT

(11) **EP 1 193 277 B1**
(45) Veröffentlichungstag und Bekanntmachung des Hinweises auf die Patenterteilung: **22.03.2006**
(21) Anmeldenummer: 01119326.5
(22) Anmeldetag: 10.08.2001
(51) Int. Cl.: C08G 18/08, C08G 18/80, C09D 175/04, C08G 18/70

(54) **Pulverförmige, wasserdispergierbare blockierte Polyisocyanataddukte, ein Verfahren zur Herstellung und ihre Verwendung**
Water dispersable blocked polyisocyanate adducts in powder form, a process for their preparation and their use
Produits d'addition de polyisocyanate blocqué pulvérulents dispersible dans l'eau, un procédé pour leur préparation et leur utilisation

(30) Priorität: 27.09.2000 DE 10047762
(43) Veröffentlichungstag der Anmeldung: 03.04.2002
(73) Patentinhaber: Degussa AG, 40474 Düsseldorf (DE)
(72) Erfinder: Mindach, Lutz, Dr., 45770 Marl (DE); Janischewski, Klaus, 46284 Dorsten (DE); Jonderko, Klaus-Peter, 44651 Herne (DE)

(56) Entgegenhaltungen:
- EP-A- 0 839 847
- DE-A- 2 708 611
- US-A- 4 480 008
- US-A- 5 811 190

## Beschreibung

Die vorliegende Erfindung betrifft pulverförmige, wasserdisperierbare blockierte Polyisocyanataddukte mit hoher Lagerstabilität, welche durch Dispergierung in Wasser bzw. durch Kombination mit weiteren Bindemitteldispersionen als Härterkomponente in wäßrigen Einbrennlacken fungieren können.

Wäßrige Dispersionen vollständig oder teilweise blockierter Polyisocyanate finden seit Jahren zunehmenden Einsatz als Härter in wäßrigen Einbrennlackierungen. Vornehmlich als wäßrige Dispersionen von Copolymerisaten auf Acrylatbasis sind verschiedene isocyanathaltige Polymerisate beschrieben (US 5 314 964, DE 44 33 874). Aus den über radikalische Polymerisation erhaltenen isocyanatfunktionalisierten Polymerdispersionen konnten die festen Copolymere durch Trocknungsverfahren gewonnen werden. Teilweise unter Zuhilfenahme von Schutzkolloiden bei der Trocknung (DE 197 11 741) und in Kombination mit anderen Bindemitteln finden die beschriebenen redispergierbaren Pulver Einsatz in Beschichtungs- und Klebemitteln. Nachteil der bekannten Herstellungsverfahren ist die notwendige Entfernung größerer Mengen Wasser, welches als Lösungsmittel bei der radikalischen Polymerisation fungiert, sowie der niedrige Gehalt an verkappten Isocyanatfunktionalitäten. Reine blockierte Polyisocyanathärter, welche in Pulverform vorliegen und durch Dispergierung als Härter in wäßrigen Einbrennlackierungen fungieren können, sind bisher nicht bekannt.

Verfahren zur Herstellung feststoffreicher wäßriger Dispersionen aus (blockierten) Polyisocyanaten nach dem Stand der Technik nutzen Emulgatoren und Schutzkolloide zur Hydrophilierung der ansonsten hydrophoben Polyisocyanate. Diese können a) physikalisch zugemischt oder b) ins Harzgerüst eingebaut werden. Nachteilig an Verfahren a) ist die permanent vorhandene Hydrophilie der externen Emulgatoren, die bei den daraus gewonnenen Beschichtungen bei Feuchtigkeitseinfluß zum Aufquellen und Erweichen führt und somit Anwendungen im Außenbereich ausschließt. Verfahren b) beruht auf der Umsetzung (eventuell teilblockierter) Polyisocyanate mit einer eine potentiell hydrophile Gruppierung tragenden Verbindung, bevor durch Dispergierung und Destillation eines eventuell vorhandenen Colösemittels die Überführung in ein rein wäßriges System erfolgt.

Meistens ist man aus Viskositätsgründen bei der Herstellung der hydrophilierten Polyisocyanataddukte auf die Verwendung organischer Hilfslösemittel angewiesen (beispielsweise EP 0 839 847 und dort aufgeführte Zitate), weiche aufwendig aus den resultierenden wäßrigen Dispersionen entfernt werden müssen. Man erhält Dispersionen, die als nahezu frei von Hilfslösemitteln zu bezeichnen sind. Bei allen so hergestellten Systemen ist jedoch u.a. die limitierte Lagerstabilität der Dispersionen als problematisch anzusehen.

DE-A-27 08 611 beschreibt zwar gegebenenfalls feste aber keine pulverförmigen carboxylgruppenhaltige Polyurethanpräpolymere mit verkappten Isocyanatgruppen. Diese sind in ihrer beschriebenen Zusammensetzung jedoch erst nach Zuhilfenahme organischer Lösemittel wie Glykolether oder Alkohole, in Wasser dispergierbar.

EP-A-0 839 487 offenbart wäßrige hilfslösemittelhaltige Dispersionen. Pulverförmige oder fester Addukte daraus werden jedoch nicht beschrieben.

US-A-5 811 190 beschreibt Pulverlacke auf der Basis von OH-Polymeren (A) mit Polyisocyanaten (B), Dicarbonsäuren (C) und einer weiteren reaktiven Komponente. Derartige Pulverlacke sind nicht geeignet und darauf abgestellt, in Wasser dispergierbar zu sein.

In der US 4 480 008 werden Pulverlacke offenbart. Der Gehalt an COOH-Gruppen ist kleiner 1,5%. Derartige Pulverlacke sind ebenfalls nicht geeignet und darauf abgestellt, in Wasser dispergierbar zu sein.

Aufgabe der vorliegenden Erfindung war es, wasserdispergierbare blockierte Polyisocyanataddukte mit · hoher Lagerstabilität in Pulverform zu finden. Als Blockierungsmittel sollten alle bekannten prinzipiell einzusetzen sein. Das Herstellungsverfahren sollte ohne die Verwendung von Wasser durchzuführen sein.

Es wurde gefunden, dass die erfindungsgemäßen pulverförmigen, wasserdispergierbaren blockierten Polyisocyanataddukte eine überraschend hohe Lagerstabilität aufweisen und auch nach Lagerung bei üblichen Temperaturen problemlos in Wasser dispergierbar sind. Die erfindungsgemäßen Polyisocyanataddukte sind nach dem erfindungsgemäßen Verfahren wasserfrei herstellbar.

Gegenstand der Erfindung sind pulverförmige, wasserdispergierbare blockierte.

Polyisocyanataddukte, mit Partikeldurchmessern von 1 bis 1000 µm, erhalten durch Umsetzung der folgenden Komponenten:
A) 5 bis 95 Gew.-% mindestens einer aliphatischen, cycloaliphatischen oder aromatischen Isocyanatkomponente mit einem mittleren Molekulargewicht bis 1000 g/mol und einer mittleren NCO-Funktionalität von 2-4;
   mit
B) 5 bis 70 Gew.-% mindestens einer potentiell ionischen und/oder nichtionischen Hydrophilierungskomponente mit mindestens einer gegenüber NCO-Gruppen reaktionsfähigen Gruppe; wobei als ionische Komponente Mono- und/oder Polyhydroxyalkylcarbonsäuren, -sulfonsäuren, -phosdphonsäuren und/oder mono- oder polyfunktionelle Aminocarbonsäure, und als nichtionisches Hydrophilierungsmittel Polyether mit mindestens einer endständigen Hydroxylgruppe eingesetzt werden,
   in einem organischen Hilfslösemittel, daran anschließender Blockierung der restlichen NCO-Gruppen mit
C) mindestens einem Blockierungsmittel, wobei 95 bis 100 % der verbliebenen NCO-Gruppen der Komponente A blockiert sind;
   Neutralisation des potientiell ionischen Gruppen, falls anwesend, mit
D) bis zu 15 Gew.% mindestens einem Neutralisationsmittel und anschließende Entfernung des organischen Hilfslösemittels.

Im Gegensatz zu den konventionell hergestellten Dispersionen bieten die erfindungsgemäßen pulverförmigen, wasserdispergierbaren blockierten Polyisocyanataddukte den entscheidenden Vorteil einer nahezu unbegrenzten Lagerstabilität. Da die Überführung in die Dispersionsform erst kurz vor der Anwendung beziehungsweise kurz vor Auslieferung geschieht, lassen sich somit wesentliche Probleme konventionell hergestellter Dispersionen bezüglich ihrer Lagerstabilität umgehen.

Hinsichtlich der Transportkosten wäßriger Dispersionen bieten die vorgestellten Systeme den grundsätzlichen Vorteil, daß kein Wasser als nichtreaktive Komponente transportiert werden muß.

Ein weiterer Vorteil der wasserdispergierbaren, pulverförmigen Polyisocyanataddukte ist die Möglichkeit, den Feststoff direkt in andere Bindemitteldispersionen einarbeiten zu können. Somit ist der Anwender in der Lage, den gewünschten Feststoffgehalt und die benötigte Spritzviskosität individuell einstellen zu können.

Darüber hinaus können Härter-Pulver auf Basis unterschiedlicher Polyisocyanate problemlos untereinander gemischt werden und so das gewünschte Eigenschaftsprofil der Beschichtung eingestellt werden. Die einfache und gezielte Einstellung der NCO / OH-Verhältnisse hinsichtlich der verwendeten Bindemitteldispersionen ist ein weiterer Vorteil der direkten Einarbeitung der beschriebenen Pulver.

Ohne Schwierigkeiten ist des weiteren die Kombination unterschiedlicher Härtungsmechanismen möglich, so beispielsweise die gleichzeitige Isocyanat- und Melaminvemetzung in Verbindung mit einer vorgegebenen Hydroxylkomponente.

Schließlich lassen sich Blockierungsmittel verwenden und kombinieren, die bei der konventionellen Dispersionsherstellung nur unzureichende Lagerstabilitäten aufweisen (z.B. Malonsäurealkylester / Acetessigester).

Grundsätzlich eignen sich als Komponente A alle in anspruch 1 definierten polyisocyanate.

Bevorzugte Isocyanate sind wegen der hohen Licht und Wetterbeständigkeit der damit hergestellten Lackfilme aliphatische und/oder cycloaliphatische Polyisocyanate mit einem mittleren Molekulargewicht von bis zu etwa 1000 g/mol und einer mittleren Isocyanatfunktionalität von 2 bis 4. Dazu gehören beispielsweise einfache Diisocyanate wie 1,6-Diisocyanatohexan (HDI), Bis(4-isocyanatocyclohexyl)methan (HMDI), 1,5-Diisocyanato-2-methylpentan (MPDI), 1,6-Diisocyanato-2,4,44-trimethylhexan (TMDI) sowie insbesondere 3-Isocyanatomethyl-3,5,5-trimethylcyclohexylisocyanat (IPDI) und/oder ihre technischen Gemische. Darüber hinaus ist die Verwendung von Polyisocyanaten möglich, welche durch Umsetzung mit bifunktionellen Reaktionspartnem (beispielsweise Diole, Diamine etc.) erhältlich sind. Eine andere bevorzugte Klasse von Polyisocyanaten sind die durch Trimerisierung, Allophanatisierung, Biuretisierung und/oder Urethanisierung der einfachen Diisocyanate hergestellten Verbindungen mit mehr als zwei Isocyanatgruppen pro Molekül, beispielsweise die Umsetzungsprodukte dieser einfachen Diisocyanate, wie beispielsweise IPDI, HDI und/oder HMDI mit mehrwertigen Alkoholen (z.B. Glycerin, Trimethylolpropan, Pentaerythrit) bzw. mehrwertigen Polyaminen oder die Triisocyanurate, die durch Trimerisierung der einfachen Diisocyanate, wie beispielsweise IPDI, HDI und HMDI, erhältlich sind. Als Vertreter der aromatischen Polyisocyanate beispielsweise Tetramethylenxylylendiisocyanat (TMXDI), 2,4- Diisocyanatotoluol und/oder dessen technischen Gemische mit 2,6-Diisocyanatotoluol sowie 4,4'-Diisocyanatodiphenylmethan und/oder dessen technischen Gemische mit 2,4'-Diisocyanatodiphenylmethan erwähnt.

Die hydrophobe Isocyanatkomponente A wird durch Umsetzung mit einem geeigneten Hydrophilierungsmittel B in die wasserdispergierbaren hydrophilierten Polyisocyanataddukte überführt. Geeignete Hydrophilierungsmittel enthalten mindestens eine NCO-reaktive Gruppe mit mindestens einem nach dem Zerewitinoff-Test aktiven Wasserstoffatom und mindestens eine hydrophile oder potentiell hydrophile Gruppe. Seitens der NCO-reaktiven Gruppen eignen sich vornehmlich Hydroxylgruppen sowie primäre und sekundäre Amingruppen. Hydrophile Gruppen können unter anderem wiederum Hydroxylgruppen sein, die in dem Hydrophilierungsmittel oder aus im Hydrophilierungsmittel vorhandenen Gruppen entstehen können. Bevorzugte hydrophile Gruppen sind z.B. die Sulfonsäure- und die Phosphonsäuregruppe. Diese sind vergleichsweise stark dissoziiert und werden daher als hydrophil angesehen. Sie können durch Neutralisation in die ionisch hydrophilen Sulfonat- bzw. Phosphonatgruppen umgewandelt werden. Ein weiteres geeignetes Hydrophilierungsmittel stellt die Carboxylgruppe dar, die als potentiell hydrophile Gruppe einzustufen ist, da sie nur schwach dissoziiert. Durch Neutralisierung läßt sich diese jedoch in die stark dissoziierte, ionisch hydrophile Carboxylatgruppe umwandeln. Eine weitere geeignete hydrophile Gruppe ist die tertiäre Aminogruppe, die durch Neutralisation mit einer Säure in die ionisch hydrophile quartäre Ammoniumgruppe umgewandelt wird.

Bei der Hydrophilierungsmitteln handelt es sich somit um (i) Mono- und Polyhydroxyalkylcarbonsäuren beispielsweise wie sie in der US 3 412 054 beschrieben sind, vorzugsweise 2,2-Dimethylolessigsäure, 2,2-Dimethylolpropionsäure, 2,2-Dimethylolbuttersäure, 2,2-Dimethylolpentansäure, Dihydroxybemsteinsäure, 1,1,1-Trimethylol-essigsäure, Hydroxypivalinsäure oder Gemische derartiger Säuren, (ii) Mono- bzw. Polyhydroxysulfonsäuren, (iii) Mono- bzw. Polyhydroxyphosphonsäuren wie 2,3-Dihydroxypropanphosphonsäure sowie (iv) mono- oder polyfunktionelle Aminocarbonsäuren, wie beispielsweise 5-Diaminovaleriansäure, 3,4-Diaminobenzoesäure, 2,4-Diaminotoluolsulfonsäure oder 11-Aminoundecansäure.

Daneben sind auch nichtionische Komponenten zur Hydrophilierung ansonsten hydrophober Polyisocyanate geeignet. Dabei handelt es sich meist um Polyether, welche pro Molekül eine oder zwei gegenüber Isocyanatgruppen reaktionsfähige Gruppen, insbesondere Hydroxylgruppen, aufweisen. Die Polyetherketten bestehen zu 80 bis 100 Gew.% aus Ethylenoxideinheiten, wobei neben diesen, den gemachten Ausführungen entsprechend, auch Propylenoxideinheiten vorliegen können. Geeignete derartige nichtionisch-hydrophilen. Aufbaukomponenten sind beispielsweise monofunktionelle Polyethylenglykol-monoalkylether mit Molekulargewichten von >350 g/mol.

Darüber hinaus besteht die Möglichkeit, ionogene und nicht-ionogene Hydrophilierungsmittel zu kombinieren. Weniger bevorzugt, aber möglich ist darüber hinaus auch die Kombination ionogener bzw. nicht-ionogener Hydrophilierungsmittel mit nicht-ionogenen, physikalisch dem Härter-Pulver zugemischten Hydrophilierungsmitteln.
Das Hydrophilierungsmittel darf natürlich nur in einer solchen Menge angewandt werden, daß genügend Isocyanatgruppen für die Vernetzungsreaktion mit dem Bindemittelharz erhalten bleiben.

Wird durch das Hydrophilierungsmittel B eine potentiell hydrophile Gruppe, z.B. eine Carboxylgruppe oder eine tertiäre Aminogruppe, in das Polyisocyanat eingeführt, so kann diese durch anschließende Neutralisation in eine ionisch hydrophile Gruppe überführt werden.

Prinzipiell kann die Neutralisation sowohl bei der Pulverherstellung - nach Umsetzung der Komponenten A und B oder A und B und C - als auch bei der abschließenden Dispergierung geschehen. Man erhält im ersten Fall neutralisierte Pulver bzw. im letzten Fall nichtneutralisierte Pulver, welche in wäßrige Lösungen der gewünschten Neutralisationsmittel eindispergiert werden können.

Das verwendete Neutralisationsmittel ist eine Base, wenn die potentiell hydrophile Gruppe eine saure Gruppe, beispielsweise die Carboxylgruppe, ist, und es ist eine Säure im Falle von basischen potentiellen hydrophilen Gruppen, wie bspw. einer tertiären Aminogruppe. Die Basen können anorganische Basen wie Ammoniak oder Hydrazin, oder organische Basen sein. Bevorzugt werden Ammoniak sowie primäre, sekundäre oder tertiäre Amine wie Ethylamin, n-Propylamin, Dimethylamin, Di-n-butylamin, Cyclohexylamin, Benzylamin, Morpholin, Piperidin und Triethanolamin. Besonders bevorzugt werden wegen ihres inerten Verhaltens gegenüber blockierten NCO-Funktionen tertiäre Amine wie N,N-Dimethylethanolamin, N,N-Diethylaminoethanol, Triethylamin, Tri-n-propylamin und Tri-n-butylamin.
Geeignete Säuren sind zweckmäßig Carbonsäuren wie beispielsweise Ameisensäure, Milchsäure, Essigsäure und/oder Benzoesäure.

Als Blockierungsmittel C für die freien NCO-Gruppen eignen sich aliphatische, cycloaliphatische und alkylaromatische (einwertige) Alkohole, z.B. niedere aliphatische Alkohole wie Methyl-, Ethylalkohol, die verschiedenen Propyl-, Butyl- und Hexylalkohole, Heptyl-, Octyl-, Nonyl-, Decylalkohol und ähnliche, ferner ungesättigte Alkohole wie Propargylalkohol oder Allylalkohole, cycloaliphatische Alkohole wie Cyclopentanol, Cyclohexanol, alkylaromatische Alkohole wie Benzylalkohol, p-Methyl-, p-Methoxy- und p-Nitrobenzylalkohol und Monoether von Glykolen wie Ethylenglykolmonoethylether, -monobutylether und ähnliche. Weitere Blockierungsmittel sind Phenole, Ketoxime, zweckmäßigerweise mit 3 bis 20 C-Atomen, vorzugsweise 3 bis 10 C-Atomen, wie Acetonoxim, Methylethylketonoxim (= Butanonoxim), Hexanonoxim (Methyl-Butylketonoxim), Heptanonoxim (Methyl-n-Amylketonoxim), Octanonoxim und Cyclohexanonoxim, CH-acide Verbindungen wie Malonsäurealkylester, Acetessigester sowie Cyanessigester mit jeweils 1 bis 4 C-Atomen in der Estergruppe, NH-acide Verbindungen wie Caprolactam sowie Aminoalkohole wie Diethylethanolamin.

Bei den zur Herstellung des blockierten und hydrophilierten Polyisocyanates notwendigen Hilfslösemitteln handelt es sich im allgemeinen um übliche inerte Lacklösemittel mit einem relativ niedrigen Siedepunkt (<100°C). Geeignete Lösemittel dieser Art sind z.B. Aceton, Methylethylketon oder Tetrahydrofuran.

Verfahren zur wasserfreien Herstellung von pulverförmigen, wasserdispergierbaren blockierten Polyisocyanataddukten mit Partikeldurchmessern von 1 bis 1000 µm, durch Umsetzung von
A) 5 bis 95 Gew.-% mindestens einer aliphatischen, cycloaliphatischen oder aromatischen Isocyanatkomponente mit einem mittleren Molekulargewicht bis 1000 g/mol und einer mittleren NCO-Funktionalität von 2-4;
   mit
B) 5 bis 70 Gew.-% mindestens einer potentiell ionischen und/oder nichtionischen Hydrophilierungskomponente mit mindestens einer gegenüber NCO-Gruppen reaktionsfähigen Gruppe; wobei als ionische Komponente Mono- und/oder Polyhydroxyalkylcarbonsäuren, -sulfonsäuren, -phosphonsäuren und/oder mono- oder polyfunktionelle Aminocarbonsäure, und als nichtionisches Hydrophilierungsmittel Polyether mit mindestens einer entständigen Hydroxylgruppe eingesetzt werden,
   in einem organischen Hilfslösemittel, daran anschließender Blockierung der restlichen NCO-Gruppen mit
C) mindestens einem Blockierungsmittel, wobei 95 bis 100% der verbliebenen NCO-Gruppen der Komponente A blockiert werden;
Neutralisation des potientiell ionischen Gruppen, falls anwesend, mit bis zu 15 Gaz % mindestens eines Neutralisationsmittels D) und anschließende Entfernung des organischen Hilfslösemittels

In einem ersten Schritt wird ein Addukt aus aliphatischen, araliphatischen, cycloaliphatischen und/oder aromatischen Polyisocyanaten und zur Hydrophilierung befähigten Komponenten in einem organischen Hilfslösemittel hergestellt. Daran schließt sich die Blockierung der noch freien Isocyanatgruppen mit geeigneten Blockierungsmitteln und die Entfernung des zur Prepolymerherstellung verwendeten Lösemitttels unter Gewinnung der gewünschten pulverförmigen Addukte an. Gegebenenfalls wird noch vorher die Umsetzung mit dem Neutralisationsmittel durchgeführt.

Das oben beschriebene Verfahren bietet zahlreiche Vorteile hinsichtlich der Herstellung von pulverförmigen Polyisocyanataddukten. Im Vergleich zu konventionell hergestellten Dispersionen ist die destillative Entfernung des unter Umständen zur Adduktherstellung notwendigen Lösemittels weniger Zeit- und damit weniger Kostenintensiv, da reines Lösemittel und nicht wie üblich ein (aceotropes) Gemisch entfernt werden muß. Darüber hinaus wird weniger Energie zur Entfernung des Lösemittels (fehlende Wasserverdampfung) benötigt. Da das reine Lösemittel wiedergewonnen wird, läßt sich dieses wieder in die Produktionskette einführen und führt somit zu einer wesentlichen Verringerung des Lösemittelverbrauchs.

Zur Herstellung der erfindungsgemäßen Polyisocyanataddukte wird hydrophobes Polyisocyanat (Komponente A) mit dem Hydrophilierungsmittel (Komponente B), in Gegenwart eines Hilfslösemittels und ggf. Katalysators, umgesetzt. Je nach Viskosität wendet man das hydrophobe Polyisocyanat zweckmäßig als Lösung in einem geeigneten Hilfslösemittel mit einem Feststoffgehalt von etwa 40 bis 80 Gewichts-% an. Geeignete Katalysatoren sind u.a. organische Zinnsalze wie Dibutylzinndiacetat oder Dibutylzinndilaurat. Man arbeitet beispielsweise zunächst bei Raumtemperatur und erhöht die Temperatur zur Vervollständigung der Reaktion bis auf etwa 120°C. Dabei wird das Reaktionsgemisch üblicherweise einige Zeit am Rückfluß halten. Bevorzugt arbeitet man bei 40 bis 100°C. Bei diesen Temperaturen sind die potentiell hydrophilen Gruppen des Hydrophilierungsmittels gegenüber Isocyanatgruppen in der Regel inert oder praktisch inert.

Das Hydrophilierungsmittel wird praktischerweise in einer solchen Menge angewandt, daß im Mittel auf ein Polyisocyanatmolekül nicht mehr als eine für die Verknüpfung vorgesehene NCO-reaktive Funktion des Hydrophilierungsmittels entfällt. Im Falle der Dimethylolpropionsäure wird also auf 2 Mol Polyisocyanat höchstens 1 Mol der Säure eingesetzt. Vorteilhaft wendet man höchstens etwa 1 Äquivalent der für die Verknüpfung vorgesehenen NCO-reaktiven Funktion pro Mol Polyisocyanat an. In jedem Fall entsteht ein Gemisch mit statistischer Verteilung der hydrophilierenden Gruppen. Dieses Gemisch wird als hydrophil modifiziertes Polyisocyanataddukt im Sinne der Erfindung betrachtet, auch wenn es nicht hydrophil modifizierte Anteile enthält.

Die Blockierung findet, je nach Blockierungsmittel, bei Raumtemperatur oder zweckmäßig bei erhöhter Temperatur von 40 bis 100°C statt. Die Blockierungsreaktion führt zu einem temperaturabhängigen Gleichgewicht. Durch orientierende Vorversuche läßt sich für ein gegebenes Polyisocyanatgemisch und ein gegebenes Blockierungsmittel die optimale Temperatur leicht ermitteln. Die Menge an benötigtem Blockierungsmittel richtet sich gewöhnlich nach der Anzahl der zu blockierenden Isocyanatfunktionen. Zweckmäßig verwendet man stöchiometrische Mengen oder einen leichten Unterschuß an Blockierungsmittel um eine vollständige Umsetzung des Blockierungsmittels zu gewährleisten, so daß weder das Produkt noch das evtl. wiederzuverwendende Hilfslösemittel mit Blockierungsmittel verunreinigt werden.

Darüber hinaus ist die Beimischung weiterer hydrophober Polyisocyanatanteile möglich bzw. die Hydrophilierung nur eines Teils der vorhandenen Polyisocyanatmoleküle.

Zur Blockierung der freien Isocyanatfunkionen kann man eine Mischung aus dem erhaltenen hydrophil modifizierten Polyisocyanat (A + B) und zusätzlichem hydrophobem Polyisocyanat (A), letzteres gegebenenfalls wiederum als etwa 40- bis 80 gewichtsprozentige Lösung in einem geeigneten Hilfslösemittel, im angegebenen Mengenverhältnis mit dem Blockierungsmittel behandeln. Wie schon erwähnt, kann die zu blockierende Mischung auch durch Umsetzung von hydrophobem Polyisocyanat mit einem entsprechenden Unterschuß an Hydrophilierungsmittel und gegebenenfalls mit Neutralisationsmittel erzeugt werden. Alternativ kann man das hydrophile modifizierte Polyisocyanat und das hydrophobe Polyisocyanat jeweils für sich blockieren und die resultierenden blockierten Produkte mischen. Zur Erleichterung der Mischvorgänge kann man in allen Fällen gegebenenfalls eine weitere Menge Hilfslösemittel zusetzen.

Grundsätzlich ist es auch möglich, zunächst hydrophobes Polyisocyanat teilweise zu blockieren, dann die verbliebenen Isocyanatgruppen mit dem Hydrophilierungsmittel umzusetzen, gegebenenfalls potentiell hydrophile Gruppen durch Neutralisation in ionisch hydrophile Gruppen umzuwandeln und das so erhaltene blockierte hydrophil modifizierte. Polyisocyanat eventuell mit weiterem blockiertem hydrophobem Polyisocyanat zu mischen. Dies ist aber weniger vorteilhaft, da dann die Hydrophilierungsreaktion wegen der geringeren Isocyanatgruppen-Konzentration unwirtschaftlich lange Zeiten beansprucht.

Hat das Hydrophilierungsmittel zunächst nur potentiell hydrophile Gruppen eingeführt, wird die Lösung der blockierten Polyisocyanate, gegebenenfalls nach Zusatz von weiterem Hilfslösemittel, neutralisiert, um die potentiell hydrophilen Gruppen in ionisch hydrophile Gruppen umzuwandeln. Wie erwähnt ist es in der Regel empfehlenswert, stärker saure und daher hydrophile Gruppen zu neutralisieren. Man wendet in beiden Fällen das Neutralisationsmittel in stöchiometrischen Mengen oder auch im Unterschuß an. Durch die Menge des Neutralisationsmittels läßt sich die Teilchengröße und damit die Viskosität der aus den pulverförmigen Addukten gewonnenen Dispersionen beeinflussen. Je größer der Unterschuß, um so größer die Teilchen und desto weniger viskos ist die resultierende Dispersion. Andererseits fördern die ionischen hydrophilen Gruppen, die durch die Neutralisation entstehen, die Dispergierung der blockierten Polyisocyanat-Addukte, so daß man nicht weniger als 50 Mol-% Neutralisationsmittel verwenden sollte. Die optimale Menge hängt auch vom Mengenverhältnis von blockiertem hydrophil modifizierten Polyisocyanat zu blockiertem hydrophoben Polyisocyanat ab und läßt sich für eine bestimmte Dispersion unschwer ermitteln.

Alternativ können aber auch nicht neutralisierte Polyisocyanataddukte verwendet werden. Diese können in Pulverform in wäßrige Lösungen der verwendeten Neutralisationsmittel eingerührt werden, wobei erst bei diesem Schritt aus den potentiell hydrophilen Gruppen die ionisch hydrophilen Gruppen gebildet werden.

Die erfindungsgemäßen Polyisocyanataddukte werden in einem anschließenden Schritt von ihrem Hilfslösemittel befreit. Hierzu eignen sich alle bekannten technischen Verfahren zur Entfernung organischer Lösemittel unter Gewinnung von Feststoffen. Prinzipiell möglich ist die destillative Entfernung des Lösemittels (evtl. unter vermindertem Druck) und Gewinnung der Pulver beispielsweise in einem geeigneten Extruder, mittels Gefrier- oder Fließbett-trocknung und einem abschließenden Mahlvorgang. Besonders vorteilhaft ist die Verwendung der Sprühtrocknungs-Technologie, welche sowohl Partikelbildung als auch Trocknung in einem Verfahrensschritt vereint. Sie erfolgt in üblichen Sprühtrocknungsanlagen, wobei die Zerstäubung mittels Ein-, Zwei- oder Mehrstoffdüsen oder aber einer rotierenden Scheibe erfolgen kann. Die Austrittstemperatur wird je nach Anlage sowie T_{g}, Art und Aufbau des Harzes im allgemeinen so gewählt, daß je nach gewähltem Blockierungsmittel keine unerwünschte Deblockierung eintritt. Durch geeignete Wahl von Bauart und Betriebsweise des Sprühtrockners lassen sich gezielt Partikeldurchmesser (und damit Schüttgewichte), Restlösemittelgehalte und Ausbeute an pulverförmigen Polyisocyanataddukten steuern.

Die Dispergierbarkeit der erhaltenen pulverförmigen Polyisocyanataddukte ist neben den bekannten Parametern wie Harzaufbau, Neutralisationsgrad und Neutralisationsmittel auch wesentlich von der Partikelgröße der zu dispergierenden Pulver abhängig. Der Partikeldurchmesser müß im Bereich von etwa 1 bis 1000 µm, bevorzugt 1 bis 300 µm engen. Der Gehalt an verbliebenem Lösemittel sollte im resultierenden Pulver < 1%, bevorzugt < 0,2 Gew.% betragen.

Gegenstand der Erfindung ist auch die Verwendung der erfindungsgemäßen pulverförmigen Polyisocyanataddukte in wässrigen Dispersionen als Vernetzerharze.

Aus den erfindungsgemäßen pulverförmigen Polyisocyanataddukten lassen sich durch Einarbeitung in Wasser oder andere Bindemitteldispersionen stabile und hilfslösemittelfreie Dispersionen mit sehr guten Verträglichkeiten zu lacküblichen Bindemitteln gewinnen. Dazu werden die pulverförmigen Polyisocyanataddukten bei Temperaturen von Raumtemperatur bis etwa 90°C unter Rühren in Wasser eingebracht. Nach eventueller Abkühlung auf Raumtemperatur erhält man stabile, feststoffreiche Dispersionen, welche bei Lagerung nach 6 Monaten bei Raumtemperatur oder nach 4 bis 8 Wochen bei 60°C weniger als 1 Masse-% des darin enthaltenen Feststoffs abscheiden. Diese sowie etwaige größere Feststoffanteile, die sich gelegentlich bei nicht optimalen Bedingungen separieren, lassen sich durch Einwirkung entsprechend hoher Scherkräfte schnell und nachhaltig redispergieren.

Die erfindungsgemäßen pulverförmigen Polyisocyanataddukte lassen sich sowohl in Pulverlack-Rezepturen als auch in wäßrigen Dispersionen als Vernetzerharze für organische Polyhydroxylverbindungen bei der Herstellung von Einbrennlacken verwenden.

Die stabilen und feststoffreichen wäßrigen und hilfslösemittelfreien Dispersionen eignen sich als Vernetzungsmittel für heißvernetzende, lagerstabile Einkomponenten-Beschichtungssysteme, vorzugsweise zur Herstellung von umweltverträglichen wasserverdünnbaren Polyurethan-Beschichtungssystemen durch Kombination mit wäßrigen Lackharzen, d.h. wäßrigen Lösungen, Dispersionen bzw. Emulsionen und/oder anderen wasserverdünnbaren Systemen aus polymeren Harzen mit im Mittel mehr als 1,5 NCO-reaktiven Gruppen, wie Hydroxyl- oder Aminogruppen, in jedem Molekül. Dazu werden die Dispersionen mit den wäßrigen Lackharzen vereinigt, zweckmäßig in solchen Mengen, daß auf jede NCO-Gruppe des Polyisocyanatadduktes eine NCO-reaktive Gruppe des Lackharzes entfällt. Gegebenenfalls werden dem Fachmann weitere Vernetzer, wie Melaminharze, und/oder bekannte Hilfsmittel. z.B. den Verlauf, den Glanz und/oder die Haftung fördernde Zusätze, zugemischt. Der fertige Lack wird, gegebenenfalls nach Verdünnung mit Wasser zur Regelung der Viskosität, in üblicher Weise auf das zu beschichtende Substrat aufgebracht. Die Beschichtung wird zweckmäßig zunächst getrocknet und dann bei ca. 80°C bis 250°C unter Abspaltung des Blockierungsmittels vernetzt.

Die folgenden Beispiele sollen die Erfindung weiter erläutern aber nicht beschränken.

### Beispiel 1: Herstellung eines neutralisierten pulverförmigen Polyisocyanataddukts

### Herstellung des hydrophilen Polyisocyanats (A + B)

741,2 g IPDI-Isocyanurat und 222,0 g IPDI werden unter Rühren in 451,4 g Aceton gelöst. Man gibt unter Rühren bei Raumtemperatur 22,0 g einer 10 %igen Lösung von Dibutylzinndilaurat in Aceton und 134,0 g pulverisierte Dimethylolpropionsäure zu und erwärmt anschließend auf ca. 60°C, so daß Rückfluß einsetzt. Man rührt unter Rückfluß weitere 6 - 8 h, bis die Dimethylolpropionsäure vollständig gelöst ist und die NCO-Zahl der Lösung 7,8 bis 8,0 % NCO beträgt.

### Blockierung (C)

Die oben hergestellte Lösung wird auf ca. 40 bis 45°C abgekühlt und unter Rühren und Kühlung in einer solchen Geschwindigkeit mit 253 g Methylethylketoxim versetzt, daß die Temperatur im Bereich von 40 bis 50°C bleibt. Man rührt weitere 30 Minuten bei dieser Temperatur und kühlt dann unter Rühren auf 30°C ab.

### Neutralisation (D)

1100 g der 60%igen acetonischen Lösung wird bei Raumtemperatur unter Rühren mit 45,6 g Dimethylaminoethanol versetzt.

### Pulvergewinnung

In einem teflonausgekleideten Sprühtrockenturm wird die erhaltene neutralisierte Lösung mit Hilfe einer Zweistoffdüse (zur Erzeugung feiner Partikel) bzw. einer Einstoffdüse (zur Erzeugung gröberer Partikel) in Kreuzgegenstrom-Fahrweise unter Inertgasatmosphäre getrocknet.

Man erhält je nach Fahrweise der Sprühtrocknung pulverförmige Polyisocyanataddukte mit einem mittleren Partikeldurchmesser von 5 bis 400 µm und Schüttgewichten von 40 bis 500 g/l. Die gewonnenen pulverförmigen Produkte zeichnen sich allesamt durch Restlösemittelgehalte von <0,2 Gew.-% aus.

### Dispergierung

413,0 g deionisiertes Wasser werden auf ca. 40°C erwärmt und unter Rühren portionsweise mit 120,0 g pulverförmigem Polyisocyanataddukt versetzt. Man steigert die Rührgeschwindigkeit und erhitzt die Mischung auf etwa 75°C. Nach einigen Minuten bei dieser Temperatur beendet man den Versuch und läßt die erhaltene Lösung auf Raumtemperatur abkühlen.

Man erhält eine nahezu transparente Dispersion mit einem Feststoffgehalt von 22,5 % (nach DIN 53216 bei 105°C), einem pH-Wert von 8,5 und einer Viskosität von < 30 mPa s (nach DIN 53019 bei D = 200 s⁻¹).

Bei Lagerung der Dispersion über einen Zeitraum von 6 Monaten bei Raumtemperatur bzw. von 4 Wochen bei 50°C erfolgt keine Koagulierung oder Sedimentation. Innerhalb dieser Zeit ist die Dispersion uneingeschränkt verwendbar.

### Beispiel 2: Herstellung eines nicht-neutralisierten pulverförmigen Polyisocyanataddukts

### Herstellung des hydrophilen Polyisocyanats (A + B)

741,2 g IPDI-Isocyanurat und 262,0 g HMDI werden unter Rühren in 468,6 g Aceton gelöst. Man gibt unter Rühren bei Raumtemperatur 22,0 g einer 10 %igen Lösung von Dibutylzinndilaurat in Aceton und 134,0 g pulverisierte Dimethylolpropionsäure zu und erwärmt anschließend auf ca. 60°C, so daß Rückfluß einsetzt Man rührt unter Rückfluß weitere 6 - 8 h, bis die Dimethylolpropionsäure vollständig gelöst ist und die NCO-Zahl der Lösung 7,7 bis 7,9 % NCO beträgt.

### Blockierung (C)

Die erhaltene Lösung wird auf ca. 40 bis 45°C abgekühlt und unter Rühren eine Lösung von 339,0 g ε-Caprolactam in 497,3 g Aceton zugetropft. Anschließend rührt man unter Rückfluß bis zu einem NCO-Gehalt < 0,5 und kühlt dann unter Rühren auf 30°C ab.

### Pulvergewinnung

In einem teflonausgekleideten Sprühtrockenturm wird die erhaltene nichtneutralisierte Lösung mit Hilfe einer Zweistoffdüse (zur Erzeugung feiner Partikel) bzw. einer Einstoffdüse (zur Erzeugung gröberer Partikel) in Kreuzgegenstrom-Fahrweise unter Inertgasatmosphäre getrocknet.

Man erhält je nach Fahrweise der Sprühtrocknung pulverförmige Polyisocyanataddukte mit einem mittleren Partikeldurchmesser von 5 bis 400 µm und Schüttgewichten von 40 bis 500 g/l. Die gewonnenen pulverförmigen Polyisocyanataddukte zeichnen sich allesamt durch Restlösemittelgehalte von <0,2 Gew.% aus.

### Dispergierung

213,0 g deionisiertes Wasser werden mit 4,5 g Triethylamin versetzt, auf ca. 40°C erwärmt und unter Rühren portionsweise 60,0 g der nicht-neutralisiertes pulverförmiges Polyisocyanataddukt zugegeben. Man steigert die Rührgeschwindigkeit und erhitzt die Mischung auf etwa 75°C. Nach einigen Minuten bei dieser Temperatur beendet man den Versuch uns läßt die erhaltene Mischung auf Raumtemperatur abkühlen.

Man erhält eine nahezu transparente Dispersion mit einem Feststoffgehalt von 22,0 % (nach DIN 53216 bei 105°C), einem pH-Wert von 8,3 und einer Viskosität von < 30 mPa s (nach DIN 53019 bei D = 200 s⁻¹).
Bei Lagerung der Dispersion über einen Zeitraum von 6 Monaten bei Raumtemperatur bzw. von 4 Wochen bei 50°C erfolgt keine Koagulierung oder Sedimentation. Innerhalb dieser Zeit ist die Dispersion uneingeschränkt verwendbar.

### Beispiel 3: Direkte Dispergierung neutralisierter pulverförmiger Polyisocyanataddukte (Beispiel 1) in andere Bindemitteldispersionen

### Dispergierung in Acrylatdispersionen

200,0 g einer Acrylatdispersion mit einer Hydroxylzahl von 98 g KOH/g, einer Säurezahl von 31 g KOH/g und einem Festkörper von 36 Gew.% (Monomerbausteine: Hydroxyethylacrylat, n-Butyl-acrylat, Methylmethacrylat, Acrylsäure, Hydroxypolyesteracrylat) werden unter mäßigem Rühren auf etwa 40°C erhitzt und portionsweise mit 56,7 g pulverförmigem Polyisocyanataddukt aus Beispiel 1 versetzt, 166,0 g Wasser zugegeben und unter Rühren weiter auf etwa 75°C erwärmt.

Nach Abkühlung erhält man eine nahezu transparente wäßrige Dispersion mit einem Festkörper von 30,9 Gew.% (nach DIN 53216 bei 105°C), einem pH-Wert von 7,6 und einer Viskosität von 380 mPa s (nach DIN 53019 bei D = 200 s⁻¹).

Bei Lagerung der Dispersion über einen Zeitraum von 6 Monaten bei Raumtemperatur bzw. von 4 Wochen bei 50°C erfolgt keine Koagulierung oder Sedimentation. Innerhalb dieser Zeit ist die Dispersion uneingeschränkt verwendbar. Das erhaltene System kann als einkomponentiges Acrylat-Polyurethansystem für hochwertige Einbrennlacke eingesetzt werden.

### Dispergierung in Polyurethanpolyoldispersionen

200,0 g einer Polyurethanpolyoldispersion mit einer OH-Zahl von 54 mg KOH/g, einer Viskosität von etwa 200 mPa s (nach DIN 53019 bei D = 200 s⁻¹), einem pH-Wert von 8,4 und einem Festkörper von 31,2 Gew % werden unter mäßigem Rühren auf etwa 40°C erhitzt und portionsweise mit 29,6 g pulverförmigem Polyisocyanataddukt aus Beispiel 1 versetzt, 36,0 g Wasser zugegeben und unter verstärkten Scherkräften auf etwa 75°C erwärmt. Nach Erreichen der Temperatur wird der Vorgang beendet und die erhaltene Dispersion auf Raumtemperatur abgekühlt.

Man erhält eine nahezu transparente wäßrige Dispersion mit einem Festkörper von 34,4 Gew.% (nach DIN 53216 bei 105°C), einem pH-Wert von 8,5 und einer Viskosität von 399 mPa s (nach DIN 53019 bei D = 200 s⁻¹).

Bei Lagerung der Dispersion über einen Zeitraum von 6 Monaten bei Raumtemperatur bzw. von 4 Wochen bei 50°C erfolgt keine Koagulierung oder Sedimentation. Innerhalb dieser Zeit ist die Dispersion uneingeschränkt verwendbar. Die resultierende Dispersion kann als einkomponentiges Polyurethansystem für hochwertige Einbrennlacke eingesetzt werden.

### Beispiel 4 Direkte Dispergierung nicht-neutralisierter Pulver (Beispiel 2) in andere Bindemitteldispersionen

200,0 g einer Acrylatdispersion (Säurezahl 41 mg KOH/g, Hydroxylzahl 98 mg KOH/g, Festkörpergehalt ~22,5 %, pH-Wert 8,4, Neutralisationsgrad 1,05)und 202,1 g VE-Wasser werden vorgelegt und unter leichtem rühren auf 40°C erwärmt. Bei ca. 2,6 m/sec Umfangsgeschwindigkeit fügt man 34,5 g nicht-neutralisiertes Pulver aus Beispiel 2 zu, erwärmt unter stärkerem Rühren (~12 m/sec Umfangsgeschwindigkeit) auf ca. 85°C und fügt 52,1 g etwa 70°C warmes entionisiertes Wasser zu.

Nach Abkühlung erhält man eine visuell trübe, lagerstabile Dispersion mit einem Festkörpergehalt von 33 %, einem pH-Wert von 7,2 und einer Viskosität von 200 bis 300 mPas.

### Beispiel 5 Direkte Dispergierung nicht-neutralisierter Pulver (Beispiel 2) in andere Bindemitteldispersionen - gezielte Einstellung des Festkörpergehaltes durch Variation des Neutralisationsgrades

Dispersionen entsprechend Beispiel 4 können durch Variation des theoretischen Neutralisationsgrades der Härterpulver gezielt auf einen gewünschten Festkörper eingestellt werden (siehe Tabelle). Man erhält lagerstabile 1K-Einbrennsysteme mit den aufgeführten Kenndaten.

| | **Polyol**^{**[1]**} | **Härter**^{**[2]**} | **DMAE**^{**[3]**} | **H**_{**2**}**O** | **NG**^{**[4]**} | **FK**^{**[5]**} | **pH** | **visuelle Ersch.** |
|---|---|---|---|---|---|---|---|---|
| a | 250,00 g | 166,10^{[6]} g | - | - | 1,00 | 27,7 | 8,8 | trüb + |
| b | 250,00 g | 36,78 g | 2,25 g | 70,00 g | 1,00 | 32,9 | 8,3 | trüb - |
| c | 250,00 g | 36,78 g | 1,81 g | 30,00 g | 0,80 | 38,7 | 7,9 | trüb + |
| d | 250,00 g | 36,78 g | 1,44 g | 10,00 g | 0,70 | 41,8 | 7,8 | trüb/trüb + |
| e | 250,00 g | 36,78 g | 1,06 g | 10,00 g | 0,60 | 41,9 | 7,6 | trüb / trüb + |

| | | | | | | | | |
|---|---|---|---|---|---|---|---|---|
| ^{[1]}: Polyurethanpolyol-Dispersion (FK 32,0%, pH 8,3, η ~ 440mPas, OH-Zahl 54 mg KOH/g, Säurezahl 21 mg KOH/g) | | | | | | | | |
| ^{[2]}: Nicht-neutralisiertes Härterpulver aus Beispiel 2 | | | | | | | | |
| ^{[3]}: Dimethylaminoethanol | | | | | | | | |
| ^{[4]}: Neutralisationsgrad | | | | | | | | |
| ^{[5]}: Festkörpergehalt der resultierenden Dispersion in % | | | | | | | | |
| ^{[6]}: Dispersion des Härter-Pulvers analog Beispiel 1 | | | | | | | | |

## Patentansprüche

1. Pulverförmige, wasserdispergierbare blockierte Polyisocyanataddukte, mit Partikeldurchmessern von 1 bis 1000 µm, erhalten durch Umsetzung der folgenden Komponenten:
A) 5 bis 95 Gew.% mindestens einer aliphatischen, cycloaliphatischen oder aromatischen Isocyanatkomponente mit einem mittleren Molekulargewicht bis 1000 g/mol und einer mittleren NCO-Funktionalität von 2-4;
mit
B) 5 bis 70 Gew.% mindestens einer potentiell ionischen und/oder nichtionischen Hydrophilierungskomponente mit mindestens einer gegenüber NCO-Gruppen reaktionsfähigen Gruppe; wobei als ionische Komponente Mono- und/oder Polyhydroxyalkylcarbonsäuren, -sulfonsäuren, -phosdphonsäuren und/oder mono- oder polyfunktionelle Aminocarbonsäure, und als nichtionisches Hydrophilierungsmittel Polyether mit mindestens einer endständigen Hydroxylgruppe eingesetzt werden,
in einem organischen Hilfslösemittel, daran anschließender Blockierung der restlichen NCO-Gruppen mit
C) mindestens einem Blockierungsmittel, wobei 95 bis 100 % der verbliebenen NCO-Gruppen der Komponente A blockiert sind; Neutralisation des potientiell ionischen Gruppen, falls anwesend, mit
D) bis 15 Gew.% mindestens einem Neutralisationsmittel und anschließende Entfernung des organischen Hilfslösemittels.

2. Pulverförmige Polyisocyanataddukte nach Anspruch 1,
**dadurch gekennzeichnet,**
**dass** als Isocyanatkomponente A) Diisocyanate, ausgewählt aus 1,6-Diisocyanatohexan (HDI), Bis(4-isocyanatocyclohexyl)methan (HMDI), 1,5-Diisocyanato-2-methylpentan (MPDI), 1,6-Diisocyanato-2,4,4-trimethylhexan (TMDI) oder 3-Isocyanatomethyl-3,5,5-trimethylcyclohexylisocyanat (IPDI), allein oder in Mischungen eingesetzt werden.

3. Pulverförmige Polyisocyanataddukte nach Anspruch 2,
**dadurch gekennzeichnet,**
**dass** die durch Trimerisierung, Allophanatisierung, Biuretisierung und/oder Urethanisierung der einfachen Diisocyanate hergestellten Verbindungen mit mindestens zwei Isocyanatgruppen pro Molekül als Isocyanatkomponente A) eingesetzt werden.

4. Pulverförmige Polyisocyanataddukte nach mindestens einem der Ansprüche 1 bis 3,
**dadurch gekennzeichnet,**
**dass** als Isocyanatkomponente A) Umsetzungsprodukte von Diisocyanaten und Polyolen und/oder Polyaminen eingesetzt werden.

5. Pulverförmige Polyisocyanataddukte nach mindestens einem der Ansprüche 1 bis 4,
**dadurch gekennzeichnet,**
**dass** als Isocyanatkomponente IPDI und/oder IPDI-Isocyanurat eingesetzt wird.

6. Pulverförmige Polyisocyanataddukte nach mindestens einem der Ansprüche 1 bis 5,
**dadurch gekennzeichnet,**
**dass** als Isocyanatkomponente A) Tetramethylenxylylendiisocyanat (TMXDI), 2,4-Diisocyanatotoluol und/oder dessen technischen Gemische mit 2,6-Diisocyanatotoluol sowie 4,4'-Diisocyanatodiphenylmethan und/oder dessen technischen Gemische mit 2,4'-Diisocyanatodiphenylmethan eingesetzt werden.

7. Pulverförmige Polyisocyanataddukte nach mindestens einem der Ansprüche 1 bis 6,
**dadurch gekennzeichnet,**
**dass** Polyether mit 80 - 100 Gew.% Ethylenoxideinheiten und/oder Propylenoxideinheiten und einem Molekulargewicht von mehr als 350 g/mol eingesetzt werden.

8. Pulverförmige Polyisocyanataddukte nach mindestens einem der Ansprüche 1 bis 7,
**dadurch gekennzeichnet,**
**dass** als Blockierungsmittel C) ein- oder mehrwertige Alkohole, Phenole, Oxime, CH-acide Verbindungen, NH-acide Verbindungen, Monoether von Glycolen und/oder Aminoalkohole eingesetzt werden.

9. Pulverförmige Polyisocyanataddukte nach Anspruch 8,
**dadurch gekennzeichnet,**
**dass** Caprolactam, Diethylethanolamin, Diisopropylamin, Malonsäuredialkylester, Acetonoxim, Acetophenonoxim, Methylethylketonoxim, Triazol und/oder Dimethylpyrazol eingesetzt werden.

10. Pulverförmige Polyisocyanataddukte nach einem der Ansprüche 1 bis 9,
**dadurch gekennzeichnet,**
**dass** als Neutralisationsmittel D) mindestens eine zur Salzbildung befähigte Verbindung eingesetzt wird.

11. Pulverförmige Polyisocyanataddukte nach Anspruch 10,
**dadurch gekennzeichnet,**
**dass** organische und/oder anorganische Basen und Säuren eingesetzt werden.

12. Pulverförmige Polyisocyanataddukte nach Anspruch 11,
**dadurch gekennzeichnet,**
**dass** Ammoniak, Amine und/oder Aminoalkohole als Basen eingesetzt werden.

13. Pulverförmige Polyisocyanataddukte nach Anspruch 12,
**dadurch gekennzeichnet,**
**dass** Ameisen-, Essig-, Milch- und/oder Benzoesäure als Säuren eingesetzt werden.

14. Pulverförmige Polyisocyanataddukte nach mindestens einem der Ansprüche 10
bis 13,
**dadurch gekennzeichnet,**
**dass** der Neutralisationsgrad 0,5 - 1,0 beträgt.

15. Pulverförmige Polyisocyanataddukte nach mindestens einem der Ansprüche 1
bis 14,
**dadurch gekennzeichnet,**
**dass** diese zusätzlich hydrophobe blockierte Polyisocyanate zugemischt enthalten.

16. Verfahren zur wasserfreien Herstellung von pulverförmigen, wasserdispergierbaren blockierten Polyisocyanataddukten- mit Partikeldurchmessern von 1 bis 1000 µm, durch Umsetzung von
A) 5 bis 95 Gew.-% mindestens einer aliphatischen, cycloaliphatischen oder aromatischen Isocyanatkomponente mit einem mittleren Molekulargewicht bis 1000 g/mol und einer mittleren NCO-Funktionalität von 2-4;
mit
B) 5 bis 70 Gew.% mindestens einer potentiell ionischen und/oder nichtionischen Hydrophilierungskomponente mit mindestens einer gegenüber NCO-Gruppen reaktionsfähigen Gruppe; wobei als ionische Komponente Mono- und/oder Polyhydroxyalkylcarbonsäuren, -sulfonsäuren, -phosphonsäuren und/oder mono- oder polyfunktionelle Aminocarbonsäure, und als nichtionisches Hydrophilierungsmittel Polyether mit mindestens einer entständigen Hydroxylgruppe eingesetzt werden,
in einem organischen Hilfslösemittel, daran anschließender Blockierung der restlichen NCO-Gruppen mit
C) mindestens einem Blockierungsmittel, wobei 95 bis 100 % der verbliebenen NCO-Gruppen der Komponente A blockiert werden;
Neutralisation des potientiell ionischen Gruppen, falls anwesend, mit bis zur 15 Gew% mindestens eines Neutralisationsmittels, und anschließende Entfernung des organischen Hilfslösemittels.

17. Verwendung der pulverförmigen Polyisocyanataddukte nach mindestens einem der Ansprüche 1 bis 15 in wässrigen Dispersionen als Vemetzerharze.

18. Verwendung nach Anspruch 17 in Polyurethandispersionen.

19. Verwendung nach Anspruch 17 in Acrylatdispersionen.

## Revendications

1. Adduits de polyisocyanate pulvérulents bloqués dispersables dans l'eau dont le diamètre des particules est compris entre 1 et 1000 µm, obtenus par réaction des composants suivants :
A) de 5 à 95 % en poids d'au moins un composant isocyanate aliphatique, cycloaliphatique ou aromatique ayant un poids moléculaire moyen allant jusqu'à 1000 g/mol et une fonction NCO moyenne allant de 2 à 4 ;
avec
B) de 5 à 70 % en poids d'au moins un composant d'hydrophilisation potentiellement ionique et/ou non ionique avec au moins un groupe réactif vis-à-vis des groupes NCO ; les composants ioniques utilisés étant des acides mono- et/ou polyhydroxyalkylcarboxyliques, des acides mono- et/ou polyhydroxysulfoniques, des acides mono- et/ou polyhydroxyphosphoniques et/ou des acides aminocarboxyliques monofonctionnels ou polyfonctionnels, et l'agent d'hydrophilisation non ionique utilisé consistant en des polyéthers comportant au moins un groupe terminal hydroxyle,
dans un solvant auxiliaire organique, puis par blocage subséquent des groupes NCO résiduels avec
C) au moins un agent bloquant moyennant lequel de 95 à 100 % des groupes NCO résiduels des composants A sont bloqués ;
neutralisation des groupes potentiellement ioniques, s'ils sont présents, par
D) jusqu'à 15 % en poids d'au moins un agent de neutralisation,
et élimination subséquente du solvant auxiliaire organique.

2. Adduits de polyisocyanate pulvérulents selon la revendication 1,
**caractérisés en ce que**
comme composants isocyanate A) on utilise des diisocyanates choisis parmi le 1,6-diisocyanatohexane (HDI), le bis(4-isocyanatocyclohexyl)méthane (HMDI), le 1,5-diisocyanato-2-méthylpentane (MPDI), le 1,6-diisocyanato-2,4,4-triméthylhexane (TMDI) ou le 3-isocyanatométhyl-3,5,5-triméthyleyclohexylisocyanate (IPDI), seuls ou en mélanges.

3. Adduits de polyisocyanate pulvérulents selon la revendication 2,
**caractérisés en ce que**
comme composants isocyanate A) on utilise les composés ayant au moins deux groupes isocyanate par molécule produits par trimérisation, allophanatisation, biurétisation et/ou uréthanisation des diisocyanates simples.

4. Adduits de polyisocyanate pulvérulents selon au moins l'une quelconque des revendications 1 à 3,
**caractérisés en ce que**
comme composants isocyanate A) on utilise des produits de la réaction entre des diisocyanates et des polyols et/ou des polyamines.

5. Adduits de polyisocyanate pulvérulents selon au moins l'une quelconque des revendications 1 à 4,
**caractérisés en ce que**
comme composants isocyanate on utilise l'IPDI et/ou l''isocyanurate d'IPDI.

6. Adduits de polyisocyanate pulvérulents selon au moins l'une quelconque des revendications 1 à 5,
**caractérisés en ce que**
comme composants isocyanate A) on utilise le diisocyanate de tétraméthylènexylène (TMXDI), le 2,4-diisocyanate de toluène et/ou ses mélanges techniques avec le 2,6-diisocyanate de toluène ainsi que le 4,4'-diisocyanate de diphénylméthane et/ ou ses mélanges industriels avec le 2,4'diisocyanate de diphénylméthane.

7. Adduits de polyisocyanate pulvérulents selon au moins l'une quelconque des revendications 1 à 6,
**caractérisés en ce qu'**
on utilise des polyéthers comportant de 80 à 100 % en poids d'unités oxyde d'éthylène et/ou d'unités oxyde de propylène et ayant un poids moléculaire supérieur à 350 g/mol.

8. Adduits de polyisocyanate pulvérulents selon au moins l'une quelconque des revendications 1 à 7,
**caractérisés en ce que**
comme composants C) on utilise des alcools monovalents ou polyvalents, des phénols, des oximes, des composés acides CH, des composés acides NH, des monoéthers de glycols et/ou des alcools aminés.

9. Adduits de polyisocyanate pulvérulents selon la revendication 8,
**caractérisés en ce qu'**
on utilise le caprolactame, la diéthyléthanolamine, la diisopropylamine, l'ester dialkylique de l'acide malonique, l'acétoxime, l'acétophénoxime, la méthyléthylcétoxime, le triazole et/ou le diméthylpyrazole.

10. Adduits de polyisocyanate pulvérulents selon l'une quelconque des revendications 1 à 9,
**caractérisés en ce que**
comme agent de neutralisation D) on utilise au moins un composé susceptible de former un sel.

11. Adduits de polyisocyanate pulvérulents selon la revendication 10,
**caractérisés en ce qu'**
on utilise des bases organiques et/ ou anorganiques et des acides.

12. Adduits de polyisocyanate pulvérulents selon la revendication 11,
**caractérisés en ce qu'**
on utilise de l'ammoniaque, des amines et/ ou des alcools aminés à titre de bases.

13. Adduits de polyisocyanate pulvérulents selon la revendication 12,
**caractérisés en ce qu'**
on utilise de l'acide formique, acétique, lactique et/ou benzoïque à titre d'acides.

14. Adduits de polyisocyanate pulvérulents selon au moins l'une quelconque des revendications 10 à 13,
**caractérisés en ce que**
le degré de neutralisation est compris entre 0,5 et 1,0.

15. Adduits de polyisocyanate pulvérulents selon au moins l'une quelconque des revendications 1 à 14,
**caractérisés en ce que**
ceux-ci contiennent encore en mélange des polyisocyanates hydrophobes bloqués.

16. Procédé de production anhydre d'adduits de polyisocyanate pulvérulents bloqués dispersables dans l'eau, de diamètre des particules compris entre 1 et 1000 µm, par réaction de
A) de 5 à 95 % en poids d'au moins un composant isocyanate aliphatique, cycloaliphatique ou aromatique ayant un poids moléculaire moyen allant jusqu'à 1000 g/mol et une fonction NCO moyenne allant de 2 à 4 ;
avec
B) de 5 à 70 % en poids d'au moins un composant d'hydrophilisation potentiellement ionique et/ ou non ionique avec au moins un groupe réactif vis-à-vis des groupes NCO ; les composants ioniques utilisés étant des acides mono- et/ou polyhydroxyalkylcarboxyliques, des acides mono- et/ ou polyhydroxysulfoniques, des acides mono- et/ ou polyhydroxyphosphoniques et/ou des acides aminocarboxyliques monofonctionnels ou polyfonctionnels, et l'agent d'hydrophilisation non ionique utilisé consistant en des polyéthers comportant au moins un groupe terminal hydroxyle,
dans un solvant auxiliaire organique, puis par blocage subséquent des groupes NCO résiduels avec
C) au moins un agent bloquant moyennant lequel de 95 à 100 % des groupes NCO résiduels des composants A sont bloqués ;
et élimination subséquente du solvant auxiliaire organique.

17. Utilisation des adduits de polyisocyanate pulvérulents selon au moins l'une quelconque des revendications 1 à 15, dans des dispersions aqueuses à titre de résines de réticulation.

18. Utilisation selon la revendication 17, dans des dispersions de polyuréthane.

19. Utilisation selon la revendication 17, dans des dispersions d'acrylate.

## Claims

1. A pulverulent, water-dispersible, blocked polyisocyanate adduct having particle diameters of from 1 to 1000 µm, obtained by reacting the following components:
A) from 5 to 95% by weight of at least one aliphatic, cycloaliphatic or aromatic isocyanate component having an average molecular weight of up to 1000 g/mol and an average NCO functionality of 2-4;
with
B) from 5 to 70% by weight of at least one potentially ionic and/or nonionic hydrophilicizing component containing at least one group which is reactive towards NCO groups; mono- and/or poly-hydroxyalkyl-carboxylic acid, -sulfonic acid, -phosphonic acid and/or mono- or poly-functional aminocarboxylic acid being used as ionic component, and polyether having at least one terminal hydroxyl group being used as nonionic hydrophilicizing agent,
in an organic auxiliary solvent, followed by blocking of the remaining NCO groups with
C) at least one blocking agent, from 95 to 100% of the remaining NCO groups of component A being blocked;
neutralizing the potentially ionic groups, if present, with
D) up to 15% by weight of at least one neutralizing agent,
and subsequently removing the organic auxiliary solvent.

2. A pulverulent polyisocyanate adduct according to claim 1, **characterized in that** diisocyanates selected from 1,6-diisocyanatohexane (HDI), bis(4-isocyanatocyclohexyl) methane (HMDI), 1,5-diisocyanato-2-methylpentane (MPDI), 1,6-diisocyanato-2,4,4-trimethylhexane (TMDI) or 3-isocyanatomethyl-3,5,5-trimethylcyclohexyl isocyanate (IPDI), alone or in mixtures, are used as isocyanate component A).

3. A pulverulent polyisocyanate adduct according to claim 2, **characterized in that** the compounds prepared by trimerizing, allophanatizing, biuretizing and/or urethanizing the simple diisocyanates, said compounds having at least two isocyanate groups per molecule, are used as isocyanate component A).

4. A pulverulent polyisocyanate adduct according to at least one of claims 1 to 3, **characterized in that** reaction products of diisocyanates and polyols and/or polyamines are used as isocyanate component A).

5. A pulverulent polyisocyanate adduct according to at least one of claims 1 to 4, **characterized in that** IPDI and/or IPDI isocyanurate are/is used as isocyanate component.

6. A pulverulent polyisocyanate adduct according to at least one of claims 1 to 5, **characterized in that** tetramethylenexylylene diisocyanate (TMXDI), 2,4-diisocyanatotoluene and/or its technical mixtures with 2,6-diisocyanatotoluene and also 4,4'-diisocyanatodiphenylmethane and/or its technical mixtures with 2,4'-diisocyanatodiphenylmethane are used as isocyanate component A).

7. A pulverulent polyisocyanate adduct according to at least one of claims 1 to 6, **characterized in that** polyethers containing 80-100% by weight of ethylene oxide units and/or propylene oxide units and having a molecular weight of more than 350 g/mol are used.

8. A pulverulent polyisocyanate adduct according to at least one of claims 1 to 7, **characterized in that** mono- or polyfunctional alcohols, phenols, oximes, CH-acidic compounds, NH-acidic compounds, glycol monoethers and/or amino alcohols are used as blocking agent C).

9. A pulverulent polyisocyanate adduct according to claim 8, **characterized in that** caprolactam, diethylethanolamine, diisopropylamine, dialkyl malonate, acetone oxime, acetophenone oxime, methyl ethyl ketone oxime, triazole and/or dimethylpyrazole are used.

10. A pulverulent polyisocyanate adduct according to any one of claims 1 to 9, **characterized in that** at least one compound capable of forming salts is used as neutralizing agent D).

11. A pulverulent polyisocyanate adduct according to claim 10, **characterized in that** organic and/or inorganic bases and acids are used.

12. A pulverulent polyisocyanate adduct according to claim 11, **characterized in that** ammonia, amine and/or amino alcohol are used as base.

13. A pulverulent polyisocyanate adduct according to claim 12, **characterized in that** formic, acetic, lactic and/or benzoic acid are used as acid.

14. A pulverulent polyisocyanate adduct according to at least one of claims 10 to 13, **characterized in that** the degree of neutralization is 0.5 - 1.0.

15. A pulverulent polyisocyanate adduct according to at least one of claims 1 to 14, **characterized in that** it further contains admixed hydrophobic blocked polyisocyanates.

16. A process for the water-free preparation of a pulverulent, water-dispersible, blocked polyisocyanate adduct having particle diameters of from 1 to 1000 µm by reacting
A) from 5 to 95% by weight of at least one aliphatic, cycloaliphatic or aromatic isocyanate component having an average molecular weight of up to 1000 g/mol and an average NCO functionality of 2-4;
with
B) from 5 to 70% by weight of at least one potentially ionic and/or nonionic hydrophilicizing component containing at least one group which is reactive towards NCO groups; mono- and/or poly-hydroxyalkyl-carboxylic acid, -sulfonic acid, -phosphonic acid and/or mono- or poly-functional aminocarboxylic acid being used as ionic component, and polyether having at least one terminal hydroxyl group being used as nonionic hydrophilicizing agent,
in an organic auxiliary solvent, followed by blocking of the remaining NCO groups with
C) at least one blocking agent, from 95 to 100% of the remaining NCO groups of component A being blocked;
neutralizing the potentially ionic groups, if present, with
up to 15% by weight of at least one neutralizing agent,
and subsequently removing the organic auxiliary solvent.

17. The use of pulverulent polyisocyanate adduct according to at least one of claims 1 to 15 in an aqueous dispersion as a crosslinker resin.

18. The use according to claim 17 in a polyurethane dispersion.

19. The use according to claim 17 in an acrylic dispersion.
